Europäisches Patentamt

European Patent Office

Office européen des brevets

(19)

(11) Veröffentlichungsnummer: **0 253 132 B1**

(12)     # EUROPÄISCHE PATENTSCHRIFT

(45) Veröffentlichungstag der Patentschrift:
**12.06.91 Patentblatt 91/24**

(51) Int. Cl.$^5$: **C02F 9/00,** C02F 1/28,
C02F 1/42, C02F 1/50,
B01D 35/04

(21) Anmeldenummer: **87108269.9**

(22) Anmeldetag: **09.06.87**

(54) **Filter zum Reinigen von Leitungswasser.**

(30) Priorität: **18.07.86 DE 3624414**

(43) Veröffentlichungstag der Anmeldung:
**20.01.88 Patentblatt 88/03**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**CH-A- 339 888**
**DE-A- 1 517 508**
**DE-A- 2 656 465**
**DE-A- 3 001 674**
**DE-U- 8 518 951**
**FR-A- 1 282 142**

(56) Entgegenhaltungen:
**FR-E- 91 283**
**US-A- 2 508 602**
**US-A- 2 692 855**
**US-A- 3 327 859**

(73) Patentinhaber: **Busch, Michael**
**Walkmühlstrasse 11**
**W-6204 Taunusstein (DE)**

(72) Erfinder: **Busch, Erich**
**Walkmühlstrasse 11**
**W-6204 Taunusstein 4 (DE)**
Erfinder: **Busch, Michael**
**Walkmühlstrasse 11**
**W-6204 Taunusstein 4 (DE)**

(74) Vertreter: **Blumbach Weser Bergen Kramer**
**Zwirner Hoffmann Patentanwälte**
**Sonnenberger Strasse 100**
**W-6200 Wiesbaden (DE)**

**Beschreibung**

Die Erfindung betrifft ein Filter zum Reinigen von Leitungswasser, insbesondere für einen Haushalts-Wasserleitungsanschluß.

Leitungswasser, insbesondere Trinkwasser aus Haushalts-Wasserleitungsanschlüssen, ist häufig in der Qualität unbefriedigend ; dies gilt sowohl für in Wasserwerken aufbereitetes und normalerweise entkeimtes Wasser als auch für aus hauseigenen Quellen stammendes Wasser. Insbesondere werden häufig eine zu hohe Härte, unangenehmer Geschmack und/oder Geruch nach Chlor oder organischen Verunreinigungen, insbesondere Phenolen, beanstandet.

Es sind zahlreiche Filter vorgeschlagen worden, die zum Anschluß an Haushalts-Wasseranschlüsse ausgelegt sind und eine Kombination von Filtermaterialien enthalten, die jeweils bestimmte Störeinflüsse ausschalten sollen. Da mehrere ihrer Natur nach unterschiedliche Störeinflüsse bekämpft werden sollen, ist eine entsprechende Anzahl unterschiedlicher Filtermaterialien erforderlich. Es macht Schwierigkeiten, diese in einem für Haushalts-Anwendungen bemessenen Filter so vorzusehen, daß die Handhabung nicht erschwert wird und eine zufriedenstellende Standzeit erzielt wird. Dabei ist insbesondere auch das Austauschen der Filtermaterialien für Privathaushalte zu umständlich und zu zeitraubend. Es ist deshalb bekannt, Filtermaterialien in Form leicht austauschbarer Filtereinsätze vorzusehen. Diese Filtereinsätze erfordern jedoch zusätzlichen Bauaufwand und Platz, weil sie in der Regel zum Umhüllen einer Portion lose eingefüllten Filtermaterials ausgelegt sind.

Insgesamt ist es bisher nicht gelungen, ein für Haushaltszwecke zufriedenstellendes Filter zu schaffen.

Demgemäß geht die vorliegende Erfindung von der Aufgabe aus, ein Filter zum Reinigen von Leitungswasser, insbesondere für einen Haushalts-Wasserleitungsanschluß, zu schaffen, das bei erträglichen Abmessungen eine hohe Standzeit aufweist, nur geringe Kosten verursacht, leicht installiert werden kann und doch eine hohe Leistungsfähigkeit hat.

Zur Lösung dieser Aufgabe geht die Erfindung aus von einem Filter der angegebenen Art, mit mehreren in Strömungsrichtung hintereinander angeordneten Lagen unterschiedlicher Filtermaterialien zum Reinigen des Wassers durch mechanische Filterwirkung, Einwirken eines Ionenaustauschmaterials und Adsorption an einem Adsorptionsmittel wie Aktivkohle, vorzugsweise unter Anwesenheit eines einer Verkeimung entgegenwirkenden oligodynamischen Mittels wie Silber oder einer schwer löslichen Silberverbindung, wobei zumindest eine Lage von einem Filtereinsatz gebildet ist.

Ein derartiges Filter ist aus der US-PS 2,595,290 bekannt. Dort dient zur mechanischen Filtration vorzugsweise ein keramischer Filtereinsatz ; im übrigen werden weitere Filtrationsaufgaben von einem Granulat-Gemisch aus Ionenaustauschharz, Adsorptionsmittel und zur Keimbekämpfung dienenden Substanzen wahrgenommen. Ein derartiges Filter ist umständlich zu regenerieren. Die keramischen Filterkörper sind teuer und benötigen viel Platz.

Aus der DE-OS 15 17 508 ist eine Vorrichtung zum eigenhändigen Aufbereiten von Trinkwasser bekannt. Mit dieser Vorrichtung soll speziell mit an sich bekannten Mitteln Wasser während des Trinkvorgangs durch eine spezielle Filterpatrone gereinigt werden. Bei dieser Patrone werden die Schwierigkeiten des Austauschs von Materialien in Pulver- oder Tablettenform in Kauf genommen, wobei als Filtermittel Aktivkohle und Komponenten, wie Silber und dergleichen, vorgesehen sind.

Zur Lösung der gestellten Aufgabe schlägt die vorliegende Erfindung vor, daß ein Adsorptions-Filtereinsatz vorgesehen ist, der aus einem selbsttragenden Sinterkörper aus fein verteiltem Adsorptionsmittel, thermoplastischem Kunstsoff-Bindemittel und einem feinverteilten, oligodynamischen Material besteht und als mechanisches Feinfilter ausgebildet ist, wobei das Bindemittel des Adsorptions-Filtereinsatzes fein verteilte Bindemittelteilchen aufweist, die im wesentlichen eine von der Kugelform abweichende, knollige Gestalt haben, und von solcher Art ist, daß es bei der Fertigung des Filters durch Erwärmung in einem Übergangs-Temperaturbereich noch ein viskoelastisches Verhalten zeigt, aber oberflächlich genügend klebrig wird, um eine Bindung mit den Teilchen des Absorptionsmittels einzugehen.

Bei dem erfindungsgemäßen Filter ist die Mehrzahl der wichtigen Filterfunktionen in einem mit geringen Kosten herstellbaren, selbsttragenden Filterkörper vereinigt, der selbst als Filtereinsatz dient. Da ein thermoplastisches Kunststoff-Bindemittels verwendet wird, erfordert die Herstellung des Absorptions-Filtereinsatzes nur einen geringen Aufwand an Einrichtungen und Kosten, und es ist leicht möglich, durch Variation der Korngrößen und Mengenanteile der zum Sintern verwendeten Materialien un der Sinterparameter bestimmte gewünschte Filterfeinheiten einzustellen. So ist es insbesondere leicht möglich, den Adsorptions-Filtereinsatz so auszulegen, daß er Teilchen mit einer Größe über etwa 0,5 μm abfängt und dadurch auch als Bakterienfilter wirkt.

Der Adsorptions-Filtereinsatz muß auf seinem Umfang gegen das Filtergehäuse abgedichtet und druckfest befestigt sein. In Ausgestaltung der Erfindungs kann dies in sehr einfacher Weise durch eine über die Umfanpsfläche des Filterkörpers erstreckte, abdichtende Verklebung erzielt werden. Um das Einkleben zu erleichtern, kann erforderlichenfalls der Adsorptions-Filterkörper 19 in der Strömungsrichtung

17 in mehrere Teilkörper kürzerer Länge unterteilt sein.

Vorzugsweise ist das Ionenaustausch-Filtermaterial ein Wasserstoff-Ionenaustauschmaterial, so daß in bekannter Weise das Wasser enthärtet wird, ohne dabei andere Metallkationen aufzunehmen.

Vorzugsweise ist in dem erfindungsgemäßen Filter das Ionenaustausch-Filtermaterial dem Adsorptions-Filtereinsatz nachgeschaltet ; dadurch wird eine Verunreinigung des wiederholt verwendbaren Ionenaustauschmaterials vermieden. Der Adsorptions-Filtereinsatz ist so kostengünstig, daß er nach Ablauf der vorgesehenen Standzeit weggeworfen werden kann.

Das erfindungsgemäße Filter kann leicht weiter ausgestaltet werden, um seine Wirkungsweise weiter zu verbessern ; dies kann in besonders schwierigen Fällen zweckmäßig sein. So kann insbesondere zwischen dem Adsorptions-Filtereinsatz und dem Ionenaustausch-Filtermaterial eine Keimstopzone vorgesehen sein, die eine stärkere Wirkung gegen Keime aufweist als der Adsorptions-Filtereinsatz. Zweckmäßigerweise enthält die Keimstopzone ein Bakterienfilter, um ein Fortschreiten eingeschleppter Keime zu verhindern. Das Bakterienfilter besteht vorzugsweise aus einem porösen Trägermaterial und einem darin verteilten oligodynamischen Material, vorzugsweise metallisches Silberpulver, weil dieses bei den meisten Wasserqualitäten eine besonders lange Standzeit hat. Vorzugsweise enthält die Keimstopzone ferner eine dem Bakterienfilter vorgeschaltete oligodynamische Schicht, um Keime zu bekämpfen, die sich im Eintrittsbereich des Bakterienfilters ansammeln.

Um Veränderungen des Geschmacks, die nach längerer Benutzungszeit von dem Ionenaustauschmaterial herrühren können, mit Sicherheit auszuschließen, kann in Ausgestaltung der Erfindung im Bereich des Endes des Strömungsweges eine Nachadsorptionszone vorgesehen sein.

Diese enthält zweckmäßigerweise eine Nachadsorptions-Filterschicht aus körniger Aktivkohle mit einer Korngröße im Bereich 0,6 bis 1,2 mm. Auch diese Aktivkohle kann mit einem oligodynamischen Material, insbesondere Silber, präpariert sein. Als Abschluß der Nachadsorptionszone kann eine am Ende des Strömungsweges angeordnete Kohlepreßscheibe vorgesehen sein ; diese enthält zweckmäßigerweise ebenfalls ein oligodynamisch wirksames Material, insbesondere Silber.

Es hat sich gezeigt, daß die Eigenschaften des Adsorptions-Filtereinsatzes besonders vorteilhaft gestaltet werden können, wenn dieser Filtereinsatz fein verteilte Bindemittelteilchen aufweist, die im wesentlichen eine von der Kugelform abweichende knollige Gestalt haben, wobei das Bindemittel von solcher Art ist, daß es bei Erwärmung in einem Übergangs-Temperaturbereich noch ein viskoelastisches Verhalten zeigt, aber oberflächlich genügend klebrig wird, um eine Bindung mit den Teilchen des Adsorptionsmittels einzugehen. Es hat sich gezeigt, daß es bei einer solchen Struktur des Adsorptions-Filtereinsatzes möglich ist, eine hohe Filterfeinheit mit einem verhältnismäßig niedrigen Strömungswiderstand zu kombinieren. Die knolligen Bindemittelteilchen bestehen vorzugsweise im wesentlichen aus höchstmolekularem Polyäthylen. Dieses hat günstige chemische und mechanische Eigenschaften, ist gesundheitlich unbedenklich und kann mit geringen Kosten beschafft werden. Besonders geeignet ist ein Niederdruck-Polyäthylen mit einem Molekulargewicht im Bereich $3...7 \cdot 10^6$.

Die Erfindung wird im folgenden anhand von Ausführungsbeispielen in Verbindung mit den Zeichnungen näher beschrieben.

Figur 1 ist eine schematische Darstellung, teilweise im Schnitt, eines des erfindungsgemäßen Filters.

Figur 2 ist eine schematische Axialschnitt-Darstellung einer anderen möglichen Ausführungsform eines erfindungsgemäßen Filters.

Figuren 3 bis 6 erläutern in schematischen Darstellungen verschiedene Anschlußmöglichkeiten eines erfindungsgemäßen Filters.

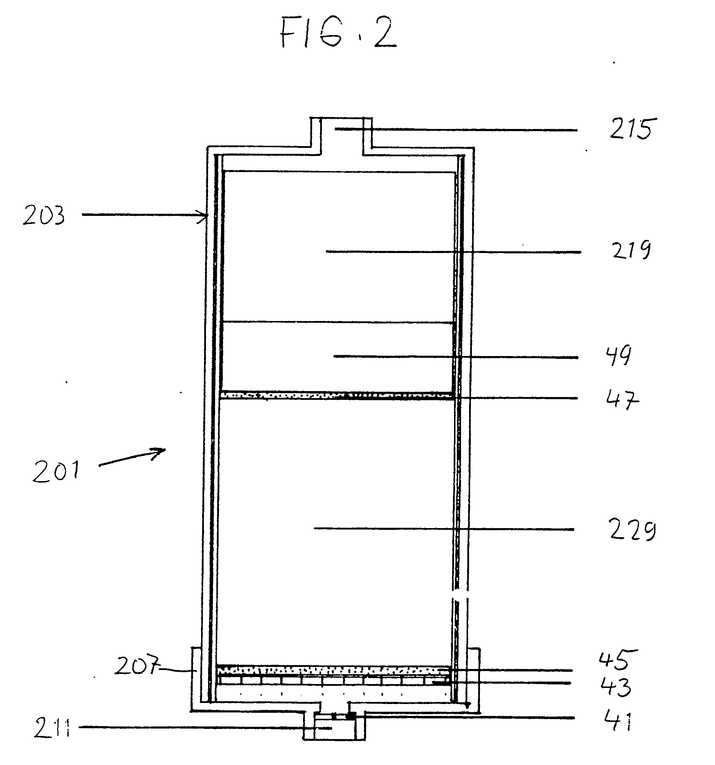

In den Figuren 2 bis 6 sind Teile, die gleichartig in einer vorhergehenden Figur gezeigt sind, mit den gleichen Bezugszeichen wie dort bezeichnet, jedoch unter Voranstellung einer die Figuren-Nummer angebenden Ziffer.

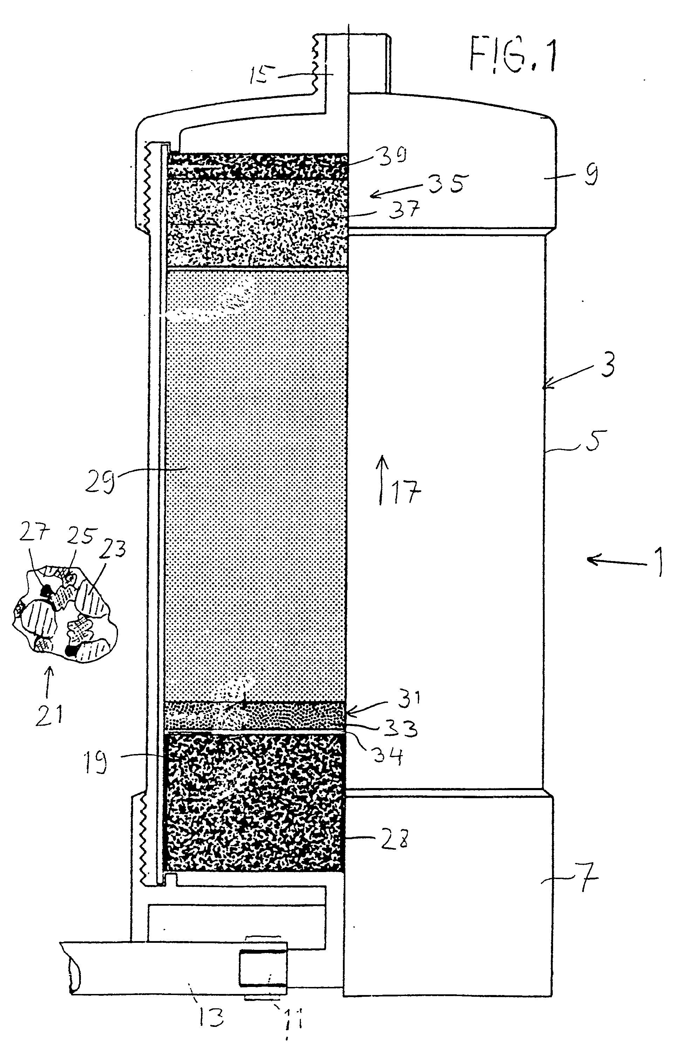

Figur 1 zeigt ein Filter 1 mit einem zylindrischen Filtergehäuse 3, das aus einem Mittelstück 5 und zwei aufschraubbaren Endkappen 7 und 9 besteht. Die Endkappe 7 bildet einen Eintrittsteil, der mit einem Eintrittsanschluß 11 versehen ist ; an diesen kann z.B. über einen Druckschlauch 13 ein richt dargestellter Haushalts-Wasseranschluß angeschlossen werden. Die zweite Endkappe 9 hat einen Austrittsanschluß 15 mit Gewinde für eine Wasserleitungs-Armatur, beispielsweise ein Rohr-Auslaufstück. Es versteht sich, daß alle Bestandteile so auszulegen sind, daß sie den im Betrieb auftretenden Drucken standhalten. Meist wird es zweckmäßig sein, ein Absperrventil stromauf des Druckschlauches 13 vorzusehen.

Das in Figur 1 dargestellte Filter enthält in Strömungsrichtung 17 hintereinander zunächst einen Adsorptions-Filtereinsatz 19, der aus einem selbsttragenden Sinterkörper besteht. In der schematischen vergrößerten Teil-Querschnittsdarstellung 21 ist die Struktur des Sinterkörpers erläutert. Teilchen 23 eines feinverteilten Adsorptionsmittels, normalerweise Aktivkohle, werden von dazwischen liegenden knollenförmigen Teilchen 25 eines thermoplastischen Kunststoff-Bindemittels zusammengehalten. Als oligodynamisches Mittel sind Silberkörner 27 eingelagert. Der Adsorptions-Filtereinsatz 19 ist bei der dargestellten Ausführungsform über seine gesamte Umfangsfläche mittels einer abdichtenden Verklebung 28 an dem Filtergehäuse 3 druckfest befestigt und abgedichtet.

Dem Adsorptions-Filtereinsatz 19 ist ein Ionenaustausch-Filtermaterial 29 nachgeschaltet, das vorzugsweise aus einem Wasserstoff-Ionenaustauschmaterial besteht und zur Enthärtung des Wassers dient.

Bei der dargestellten Ausführungsform ist zwischen dem Adsorptions-Filtereinsatz 19 und dem Ionenaustausch-Filtermaterial 29 eine Keimstopzone 31 vorgesehen. Diese enthält bei der dargestellten Ausführungsform ein Bakterienfilter 33 in Form eines Aktivkohle-Preßblocks, der ähnlich aufgebaut ist wie der Adsorptions-Filtereinsatz 19, aber eine noch feinere Porosität hat, insbesondere etwa 0,2 µm und in ihm eingelagertes metallisches Silberpulver aufweist. Bei der dargestellten Ausführungsform enthält die Keimstopzone ferner eine dem Bakterienfilter vorgeschaltete oligodynamische Schicht 34 in Form einer dünnen Schicht aus einem Granulat, das einen hohen Gehalt an oligodynamischem Material, insbesondere Silber, aufweist. Dadurch ist eine wirksame Bekämpfung von Keimen sichergestellt, die sich im Eintrittsbereich des Bakterienfilters ansammeln.

Im Bereich des Endes des Strömungsweges ist bei der dargestellten Ausführungsform eine Nachadsorptionszone 35 vorgesehen. Diese enthält bei der dargestellten Ausführungsform eine Nachadsorptions-Filterschicht 37. Da in diesem Bereich mehr die Adsorptionswirkung im Vordergrund steht, kann die Nachadsorptions-Filterschicht 37 normalerweise verhältnismäßig größere Poren und damit einen geringeren Strömungswiderstand haben. Sie kann deshalb einfach aus einer geschütteten Aktivkohleschicht bestehen.

Bei der dargestellten Ausführungsform enthält die Nachadsorptionszone 35 ferner noch eine am Ende des Strömungsweges angeordnete Kohlepreßscheibe 39, die eine ausreichende Festigkeit hat, um direkt als Anlage für die aufgeschraubte Endkappe 9 zu dienen. Bei der dargestellten Ausführungsform sind in die Kohlepreßscheibe Silberkörner eingelagert, um einer möglicherweise von der Reinwasserseite des Filters herkommenden Verkeimung entgegenzuwirken.

Figur 2 zeigt ein Filter zum Reinigen von Leitungswasser von Schadstoffen sowie zur Entcarbonisierung und Entkeimung in einem Filtervorgang. Die einzelnen Filtermaterialien sind in fünf verschiedenen Schichten übereinander in einer Filterpatrone angeordnet. Jede Schicht bewirkt eine Teillösung der Gesamtaufbereitung, wobei ein gesilbertes Kunststoff-Filterelement die Elimination eventuell im Wasser befindlicher Keime bewirkt und damit auch einer Verkeimung im Inneren der Filterpatrone vorbeugt. Ein Ionenaustauscher entzieht dem Wasser die Carbonate. Das filtrierte Wasser ist nach dem Durchlauf durch das Ionenaustauschmaterial völlig enthärtet. Die Adsorption vieler Schadstoffe, vor allem Chlor, wird von Aktivkohle bewirkt, während ein Kohleblock organische Stoffe, Geruch, Geschmack und Verfärbung des Wassers beseitigt und eine Ausfiltrierung sämtlicher Chemikalien mit Teilchen über 1 µm, vorzugsweise 0,5 µm Größe bewirkt. Der Kohlepreßblock bildet einen Adsorptions-Filtereinsatz.

Im einzelnen enthält die in Figur 2 dargestellte Filterpatrone 201 ein zylindrisches Filtergehäuse 203, das auf seiner einen, in der Figur unteren Seite geöffnet werden kann, und zwar dadurch, daß dort ein Schraubdeckel 207 vorgesehen ist. Auf dieser Seite des Filtergehäuses ist ein Stutzen 211 vorgesehen, durch den das zu filtrierende Leitungswasser eingeführt wird. Zum Begrenzen der Durchflußmenge ist eine Einlochscheibe 41 vorgesehen. Das Wasser wird durch den Leitungswasserdruck durch eine gelochte Verteilerscheibe 43 in das Innere eines Ionenaustauschmaterials 229 gepreßt und gleichmäßig verteilt. Zwischen der Verteilerscheibe 43 und dem Ionenaustauschmaterial 229 ist noch eine Grobfilterscheibe 45 vorgesehen. Von dem Wasser wird zuerst die Grobfilterscheibe 45 durchdrungen, sodann das Ionenaustauschmaterial 229. Das Wasser strömt sodann weiter durch eine Filterscheibe 47. Diese besteht aus porösem Kunststoff, der mit Silber belegt ist. Es folgt sodann eine Schicht 49 aus granulierter gesilberter Aktivkohle, und zuletzt ein Adsorptions-Filtereinsatz 219. Nach Passieren dieses Einsatzes 219 strömt das nunmehr filtrierte Wasser durch einen Anschlußstutzen 215 ab.

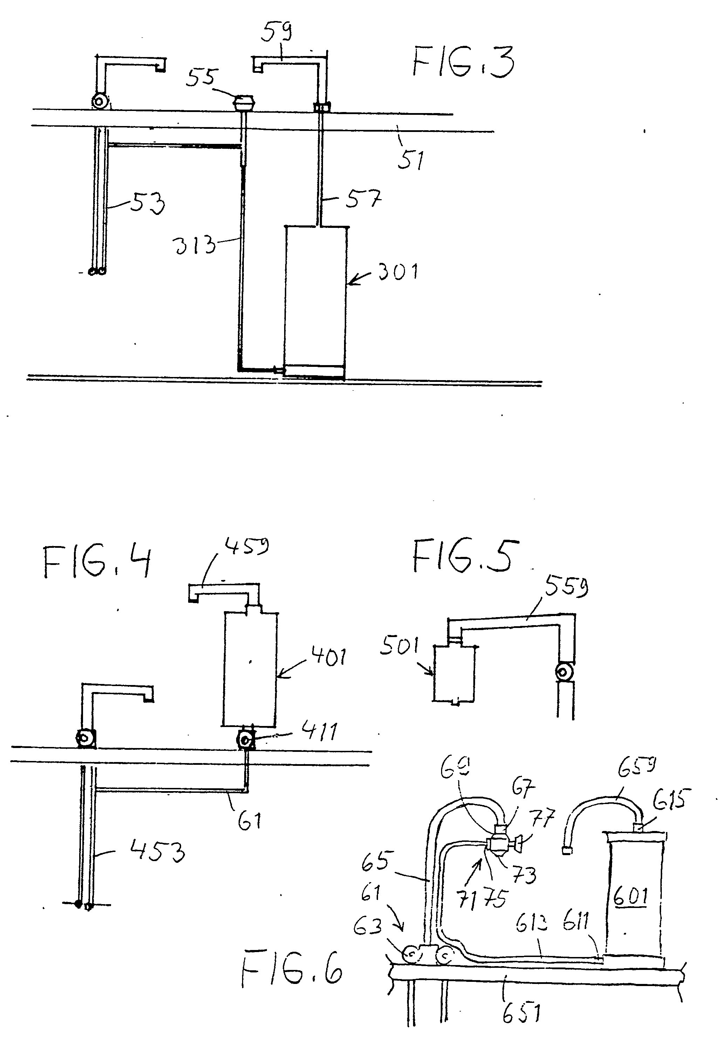

Figur 3 zeigt eine Anordnung eines Filters 301 unter einem Spültisch 51. Die Wasserzufuhr erfolgt durch Anschluß mittels eines T-Stücks an dem Kaltwasserzuführungsrohr 53 der Spültischarmatur. Das T-Stück ist über ein Geräteanschlußventil 55 und einen Kunststoffschlauch 313 mit dem Filter 301 verbunden. Der Ablauf des filtrierten Wassers erfolgt über einen Kunststoffschlauch 57 durch einen Wasserhahn 59.

Figur 4 zeigt eine Anordnung, bei der das Filter 401 mit einem Wasserhahn 459 an seinem Einlaufstutzen 411 auf ein Verbindungsrohr 61 aufgeschraubt ist, das eine Zuleitung zu der Wasserleitung 453 darstellt.

Figur 5 zeigt eine Anordnung, bei der das Filter 501 zur Wasseraufbereitung auf einen bestehenden Wasserhahn 559 aufgeschraubt ist.

Figur 6 zeigt eine Anordnung, bei der das Filter 601 auf einem Spültisch 651 aufgebaut ist. An den Austrittsanschluß 615 ist ein Auslaufrohr 659 angeschlossen. Eine übliche Auslaßarmatur 61 mit Mischbatterie 63 und Auslaufrohr 65 ist vorhanden. An das Auslaufende 67 des Auslaufrohres ist der Eingang 69 eines Zweiwegeventils 71 geschraubt. Das Zweigeventil 71 hat einen nach unten gerichteten ersten Ausgang 73, einen seitlichen zweiten Ausgang 75 und einen Schaltknopf 77, der zwischen zwei Schaltstellungen umrastbar ist. Der zweite Ausgang 73 ist über einen Druckschlauch 613 an den Eintrittsanschluß 611 des Filters 601 angeschlossen. Das Auslaufrohr 65 ist bei der ersten Schaltstellung des Schaltknopfes 77 an den ersten Ausgang 73 des Zweiwegeventils 71 angeschlossen. Dann kann Leitungswasser wie üblich entnommen werden. In der zweiten Schaltstellung des Schaltknopfes 77 ist das Auslaufrohr 65 über den zweiten Ausgang 75 an den Druckschlauch 613 angeschlossen. Dann kann filtriertes Wasser aus dem Auslaufrohr 659 des Filters 601 entnommen werden.

## Ansprüche

1. Filter zum Reinigen von Leitungswasser, insbesondere für einen Haushalts-Wasseranschluß, mit einem Filtergehäuse, mehreren in Strömungsrichtung (17) hintereinander angeordneten Lagen unterschiedlicher Filtermaterialien zum Reinigen des Wassers durch mechanische Filterwirkung, Einwirkung eines Ionenaustauschmaterials und Adsorption an einem Adsorptionsmittel, wie Aktivkohle, dadurch gekennzeichnet, daß ein Adsorptions-Filtereinsatz (19) vorgesehen ist, der aus einem selbsttragenden Sinterkörper aus fein verteiltem Adsorptionsmittel (23), thermoplastischem Kunststoff-Bindemittel (25) und einem feinverteilten, oligodynamischen Material besteht und als mechanisches Feinfilter ausgebildet ist, wobei das Bindemittel (25) des Adsorptiorns-Filtereinsatzes (19) fein verteilte Bindemittelteilchen aufweist, die im wesentlichen eine von der Kugelform abweichende, knollige Gestalt haben, und von solcher Art ist, daß es bei der Fertigung des Filters durch Erwärmung in einem Übergangs-Temperaturbereich noch ein viskoelastiches Verhalten zeigt, aber oberflächlich genügend klebrig wird, um eine Bindung mit den Teilchen des Adsorptionsmittels einzugehen.

2. Filter nach Anspruch 1, gekennzeichnet durch die Anwesenheit eines einer Verkeimung entgegenwirkenden, schwer löslichen oligodynamischen Materials, wie Silber oder schwer lösliche Silberverbindungen, wobei zumindest eine Lage von einem Filtereinsatz gebildet ist.

3. Filter nach Anspruch 1 oder 2, dadurch gekennzeichnet, daß der Adsorptionsfiltereinsatz (19) zum Abfangen von Teilchen ausgelegt ist, die eine Größe über etwa 0,5 μm haben.

4. Filter nach einem der Ansprüche 1 bis 3, dadurch gekennzeichnet, daß der Adsorptionsfiltereinsatz (19) über seine Umfangsfläche an dem Filtergehäuse (5) mittels einer Verklebung (28) druckfest befestigt und abgedichtet ist.

5. Filter nach einem der Ansprüche 1 bis 4, dadurch gekennzeichnet, daß dem Adsorptionsfiltereinsatz (19) irin Ionenaustauschmaterial (29), vorzugsweise ein Wasserstoff-Ionenaustauschmaterial, nachgeschaltet ist.

6. Filter nach einem der Ansprüche 1 bis 5, dadurch gekennzeichnet, daß zwischen dem Adsorptions-Filtereinsatz (19) und dem Ionenaustauschmaterial (29) eine Keimstoppzone (31) vorgesehen ist, die ein Bakterienfilter (33) enthalten kann, der vorzugsweise ein Kohlepreßblock mit einer dem Adsorptions-Filtereinsatz ähnlichen Struktur ist und ein in ihm verteiltes oligodynamisches Material aufweist.

7. Filter nach Anspruch 6, dadurch gekennzeichnet, daß die Keimstoppzone (31) eine dem Bakterienfilter (33) vorgeschalte, oligodynamische Schicht (34) aufweist.

8. Filter nach einem der Ansprüche 1 bis 7, dadurch gekennzeichnet, daß im Bereich des Endes des Strömungsweges eine Nachadsorptionszone (35), vorzugsweise als Nachadsorptions-Filterschicht (37), vorgesehen ist, die zweckmäßig eine geschüttete Aktivkohleschicht (37) ist und vorzugsweise eine am Ende des Strömungsweiges angeordnete Kohlepreßscheibe (39) aufweist, die vorzugsweise ein oligodynamisches Material, wie Silber, enthält.

9. Filter nach einem der Ansprüche 1 bis 8, dadurch gekennzeichnet, daß die Bindemittelteilchen (25) im wesentlichen aus höchstmolekularem Polyethylen bestehen, wobei vorzugsweise das Polyethylen ein Niederdruck-Polyethylen mit einem Molekulargewicht im Bereich $3 ... 7 \times 10^6$ ist.

10. Filter nach einem der Ansprüche 1 bis 9, dadurch gekennzeichnet, daß der Adsorptionsfiltereinsatz (19) in der Strömungsrichtung (17) in mehrere Teilkörper kürzerer Länge unterteilt ist.

## Revendications

1. Filtre pour la purification de l'eau de distribution, en particulier pour un raccordement domestique au réseau, comportant plusieurs couches disposées les unes derrière les autres dans le sens (17) de circulation de l'eau de matières filtrantes différentes destinées à purifier l'eau par une action de filtration mécanique, par effet d'un produit échangeur d'ions et par adsorption sur un produit d'adsorption, tel que du charbon actif, caractérisé en ce qu'il est prévu une cartouche filtrante par adsorption (19) qui est constituée par un corps fritté auto-porteur réalisé en un produit d'adsorption finement divisé (23), une matière thermo-plastique de liaison (25) et un matériau oligodynamique divisé, et qui forme un filtre mécanique, ladite matière de liaison (25) de ladite cartouche filtrante (19) présentant des particules de liaison finement divisées et réparties qui ont globalement une forme globulaire s'écartant de la forme sphérique, et étant d'un type tel qu'elle présente encore lors de la fabrication dudit filtre par échauffement un comportement viscoélastique dans une zone de température de transition, mais devient superficiellement suffisamment collante pour constituer une liaison entre les particules du produit d'adsorption.

2. Filtre selon la revendication 1, caractérisé par la présence d'une matière oligodynamique peu soluble, active contre les germes, telle que de l'argent ou des composés à base d'argent peu solubles, constituant au moins une couche d'une cartouche filtrante.

3. Filtre selon l'une quelconque des revendications 1 ou 2, caractérisé en ce que la cartouche filtrante par adsorption (19) est construite pour intercepter des particules dont la grosseur est supérieure à 0,5 μm environ.

4. Filtre selon l'une quelconque des revendications 1 à 3, caractérisé en ce que la cartouche filtrante par adsorption (19) est fixée sur sa périphérie externe au boîtier (5) du filtre au moyen d'un collage (28) résistant à la pression et formant étanchéité.

5. Filtre selon l'une quelconque des revendications 1 à 4, caractérisé en ce qu'un produit échangeur d'ions (29), et de préférence un échangeur d'ions à base d'hydrogène, est disposé en aval de la cartouche filtrante par adsortion (19).

6. Filtre selon l'une quelconque des revendications 1 à 5, caractérisé en ce qu'une zone d'arrêt (31) des germes est prévue entre la cartouche filtrante (19) et le produit échangeur d'ions (29), zone pouvant comporter un filtre à bactéries (33) qui est de préférence constitué par un bloc de charbon comprimé ayant une structure analogue à celle de la cartouche filtrante par absorption et contenant un matériau oligodynamique en son sein.

7. Filtre selon la revendication 6, caractérisé en ce que la zone d'arrêt (31) des germes comporte une couche oligodynamique (34) disposée en amont du filtre à bactéries (33).

8. Filtre selon l'une quelconque des revendications 1 à 7, caractérisé en ce qu'une zone de post-adsorption (35) est prévue dans la région située à la fin du parcours de l'eau, zone ayant de préférence la forme d'une cartouche filtrante de post-adsorption (37) qui est opportunément une couche de charbon actif en vrac (37) et présente de préférence une plaque de charbon comprimé (39) disposée à l'extrémité du parcours de l'eau, plaque qui renferme de préférence une matière oligodynamique, telle que de l'argent.

9. Filtre selon l'une quelconque des revendications 1 à 8, caractérisé en ce que les particules de liaison (25) sont constituées pour l'essentiel de polyéthylènes de poids moléculaire le plus élevé, ledit polyéthylène étant de préférence un polyéthylène basse pression ayant un poids moléculaire situé dans les zones 3... $7 \times 10^6$.

10. Filtre selon l'une quelconque des revendications 1 à 9, caractérisé en ce que la cartouche filtrante par adsoprtion (19) est subdivisée dans le sens (17) de circulation de l'eau en plusieurs parties de plus faible longueur.

## Claims

1. A filter for the purification of tapwater, more particularly for connection to a domestic water supply, comprising a filter housing, a plurality layers of different filter materials for purifying the water by mechanical filter action, the action of an ion-exchange material and adsorption on an adsorption agent such as activated carbon, said layers being disposed consecutively in the direction of flow (17), characterized in that an adsorption filter insert (19) is provided which consists of a self-supporting sintered member of finely divided adsorption agent (23), thermoplastic binder (25) and a finely divided oligodynamic material, and is constructed as a mechanical fine filter, the binder (25) of the adsorption filter insert (19) having finely divided binder particles having substantially a bulbous shape deviating from the spherical, and being of a nature such that during the manufacture of the filter as a result of heating in a transition temperature range it still has a visco-elastic characteristic but is superficially sufficient tacky to form a bond with the particles of the adsorption agent.

2. A filter according to claim 1, characterised by the presence of an infection-couteracting difficultly soluble oligodynamic material, such as silver or difficultly soluble silver compounds, at least one layer being formed by a filter insert.

3. A filter according to claim 1 or 2, characterised in that the absorption filter insert (19) is designed to trap particles of a size above approximately 0.5 μm.

4. A filter according to any one of claims 1 to 3, characterised in that the adsorption filter insert (19) is secured by way of its peripheral surface to the filter housing (5) by an adhesive connection (28) so as to pressure-tight and sealed.

5. A filter according to any one of claims 1 to 4, characterised in that the absorption filter insert (19) is followed by an ion-exchange material (29), preferably a hydrogen ion-exchange material.

6. A filter according to any one of claims 1 to 5, characterised in that a bacteria stop zone (31) is provided between the adsorption filter insert (19) and the ion-exchange material (29) and may contain a bacterial filter (33) which is preferably a compressed carbon block having a structure similar to the adsorption filter insert and has an oligodynamic material distributed therein.

7. A filter according to claim 6, characterised in that the bacteria stop zone (31) comprises an oligodynamic layer (34) preceding the bacterial filter (33).

8. A filter according to any one of claims 1 to 7, characterised in that a post-adsorption zone (35), preferably in the form of a post-adsorption filter layer (37) is provided in the zone at the end of the flow path and is advantageously a distributed activated carbon layer (37) and preferably has a compressed carbon disc (39) disposed at the end of the flow path and preferably containing an oligodynamic material, such as silver.

9. A filter according to any of claims 1 to 8, characterised in that the binder particles (25) consist substantially of maximum-molecular polyethylene, the polyethylene preferably being a low-pressure polyethylene having a molecular weight in the range of $3...7 \times 10^6$.

10. A filter according to any one of claims 1 to 9, characterised in that the adsorption filter insert (19) is subdivided into a number of sub-members of shorter length in the direction of flow (17).

FIG.1

# FIG·2

215
203
219
49
47
201
229
207
45
43
211
41

FIG.3

FIG.4

FIG.5

FIG.6